# EUROPÄISCHE PATENTSCHRIFT

(11) **EP 1 611 002 B1**
(45) Veröffentlichungstag und Bekanntmachung des Hinweises auf die Patenterteilung: **20.06.2007**
(21) Anmeldenummer: 04723537.9
(22) Anmeldetag: 26.03.2004
(51) Int. Cl.: B62K 25/28

(54) **FAHRRAD MIT EINER HINTERRADSCHWINGE**
BICYCLE WITH A SWING ARM REAR SUSPENSION
BICYCLETTE DOTEE D'UNE SUSPENSION DE ROUE ARRIERE

(30) Priorität: 07.04.2003 DE 10316012
(43) Veröffentlichungstag der Anmeldung: 04.01.2006
(73) Patentinhaber: Schaeffler KG, 91074 Herzogenaurach (DE)
(72) Erfinder: SPERBER, Matthias, 96193 Wachenroth (DE)
(86) Internationale Anmeldenummer: PCT/EP2004/003190
(87) Internationale Veröffentlichungsnummer: WO 2004/089734

(56) Entgegenhaltungen:
- WO-A-01/81159
- GB-A- 378 174
- US-A- 4 055 229
- US-A- 5 217 241
- US-A- 5 927 741

## Beschreibung

### Anwendungsgebiet der Erfindung

Die Erfindung betrifft ein Fahrrad mit einem Rahmen, einer gefederten, ein Hinterrad tragenden Hinterradschwinge, die in Bezug zum Rahmen eine Bewegung ausführen kann, bei der sich das Hinterrad auf einer Bahn bewegt, wobei die Hinterradschwinge über wenigstens eine Lagerstelle mit dem Rahmen verbunden ist und die Lagerstelle durch zwei in axialer Richtung voneinander beabstandete Schrägnadellager gebildet ist, deren Abstand zueinander ein-und nachstellbar ist.

### Hintergrund der Erfindung

Derartige Fahrräder mit Hinterradschwingen sind beispielsweise aus dem Katalog 1/2003 STEVENS BIKES, der Firma Stevens Vertriebs GmbH, Asbrookdamm 35, Hamburg vorbekannt. So ist auf dessen Seite 7 ein Rad abgebildet, dessen Hinterradschwinge über mehrere Lagerstellen mit dem Rahmen verbunden ist.

Derartige Lagerstellen sind nach dem bisherigen Stand der Technik als buchsenförmige Gleitlager ausgebildet, was aber mit den verschiedensten Nachteilen verbunden ist. Wie der Fachmann weiß, sind derartige buchsenförmige Gleitlager sehr verschleißanfällig, weil durch Abrieb radiales und axiales Spiel entsteht. Durch das Spiel entstehen Spalten, die das Eindringen von Schutz und Feuchtigkeit in das Lagerinnere begünstigen. Darüber hinaus wird durch das ständig sich vergrößernde Spiel der buchsenförmigen Gleitlager deren Steifigkeit verringert. Diese mangelnde Steifigkeit erzeugt einerseits ein unsicheres Fahrgefühl und vergrößert andererseits auch die Geräuschentwicklung der Lagerstellen. Ein weiterer Nachteil derart eingesetzter Gleitlager ist deren nicht gegebene Nachstellbarkeit und deren schlechte Demontage.

In diesem Zusammenhang ist aus der US 5,927,741 eine Hinterradschwinge mit den Merkmalen des Oberbegriffes des Anspruchs 1 bekannt, deren Lagerung aus zwei von in axialer Richtung beabstandeten Schrägnadellagern besteht, deren Abstand zueinander einstellbar ist. Nachteilig dabei ist, dass die als Laufbahnen für die Schrägnadellager fungierenden Teile aufgrund der vorherrschenden mechanischen Belastungen sehr kompakt sein müssen, was einerseits viel Bauraum beansprucht und andererseits ein hohes Gewicht der Lageranordnung bewirkt.

### Zusammenfassung der Erfindung

Der Erfindung liegt daher die Aufgabe zu Grunde, ein Fahrrad mit einer Hinterradschwinge bereitzustellen, die die vorstehend genannten Nachteile vermeidet.

Erfindungsgemäß wird diese Aufgabe nach dem kennzeichnenden Teil von Anspruch 1 in Verbindung mit dessen Oberbegriff dadurch gelöst, dass in einem Käfig geführte Lagernadeln auf zugehörigen Laufscheiben abrollen, wobei die eine Laufscheibe mit wenigstens einem Teil ihrer äußeren Mantelfläche an einer äußeren drehfest angeordneten Buchse anliegt, während die andere Laufscheibe von einer Einstellschraube aufgenommen ist, die mit einem Außengewinde in ein Innengewinde eines beweglichen Teils eingesetzt ist.

Der wesentliche Vorteil der erfindungsgemäß eingesetzten Schrägnadellager liegt darin, dass diese eine hohe radiale und axiale Tragfähigkeit aufweisen und sich radialer und axialer Verschleiß ausgleichen lässt. Ein weiterer Vorteil ist dadurch begründet, dass durch die Einstellbarkeit des Abstandes beider Schrägnadellager zueinander eine hohe Steifigkeit bzw. Spielfreiheit gegeben ist, die sich positiv auf das gesamte Fahrverhalten des Fahrrades auswirkt. Ein weiterer Vorteil ist durch die einfache Montage bzw. Demontage der erfindungsgemäßen Lageranordnung gegeben, so dass diese auch durch einen Laien ohne Spezialwerkzeug ausgeführt werden kann. Darüber hinaus sind die eingesetzten Schrägnadellager als kostengünstige Zukaufteile in mannigfaltigen Größenverhältnissen auf dem Markt vorhanden, wobei die eingesetzten Laufscheiben ohne großen Aufwand einem Härteprozess unterworfen werden können.

Weitere vorteilhafte Ausführungsvarianten sind in den Unteransprüchen 2 bis 7 beschrieben.

Nach einem weiteren zusätzlichen Merkmal gemäß Anspruch 2 sollen die beiden in axialer Richtung voneinander beabstandeten Einstellschrauben miteinander verbunden sein, wobei das nach Anspruch 3 derart erfolgt, dass in der äußeren Buchse ein Verbindungsstück angeordnet ist, das mit den beiden Einstellschrauben über je eine Befestigungsschraube verbunden ist. Dieses Verbindungsstück wirkt praktisch als Zuganker und sorgt dafür, dass auftretende Axialkräfte problemlos aufgenommen werden können. Je nach gegebenen Einbauverhältnissen sind auch andere Verbindungsmöglichkeiten möglich. So ist es beispielsweise denkbar, dass beide Einstellschrauben über eine sie durchsetzende Halteschraube miteinander verbunden sind.

Nach einem weiteren zusätzlichen Merkmal der Erfindung gemäß Anspruch 4 ist vorgesehen, dass an der der äußeren Buchse zugeordneten Laufscheibe an deren beiden Enden je ein Dichtring angeordnet ist. Der außen liegende Dichtring sorgt dafür, dass kein Schmutz in das Lagerinnere eindringen kann, während der innen liegende Dichtring ein Abgleiten der Schrägnadellager beim Montagevorgang von der Einstellschraube verhindert.

Schließlich sind in den Ansprüchen 5, 6 und 7 verschiedene Möglichkeiten des Einsatzes der erfindungsgemäßen Lager in einem Fahrradrahmen beschrieben.

So ist nach Anspruch 5 vorgesehen, dass die Hinterradschwinge aus einer unteren Hinterradstrebe und aus einer oberen Hinterradstrebe gebildet ist, die miteinander über die erste Lagerstelle verbunden sind, und dass die untere Hinterradstrebe über die zweite Lagerstelle mit dem Rahmen verbunden ist.

Nach Anspruch 6 soll die obere Hinterradstrebe über die dritte Lagerstelle mit einem Anlenkhebel verbunden sein, der wiederum über die vierte Lagerstelle mit einem Oberrohr des Rahmens verbunden ist.

Anspruch 7 sieht vor, dass die obere Hinterradstrebe über die fünfte Lagerstelle mit einem Dämpfungsglied verbunden ist, das wiederum über die sechste Lagerstelle mit dem Oberrohr verbunden ist.

Die Erfindung wird an nachstehendem Ausführungsbeispiel näher erläutert.

### Kurze Beschreibung der Zeichnungen

Es zeigen:
- Figur 1: eine Seitenansicht eines Fahrradrahmens mit verschiedenen Anlenkstellen der Hinterradschwinge und
- Figur 2: einen Längsschnitt durch eine erfindungsgemäße Lageranordnung.

### Ausführliche Beschreibung der Zeichnungen

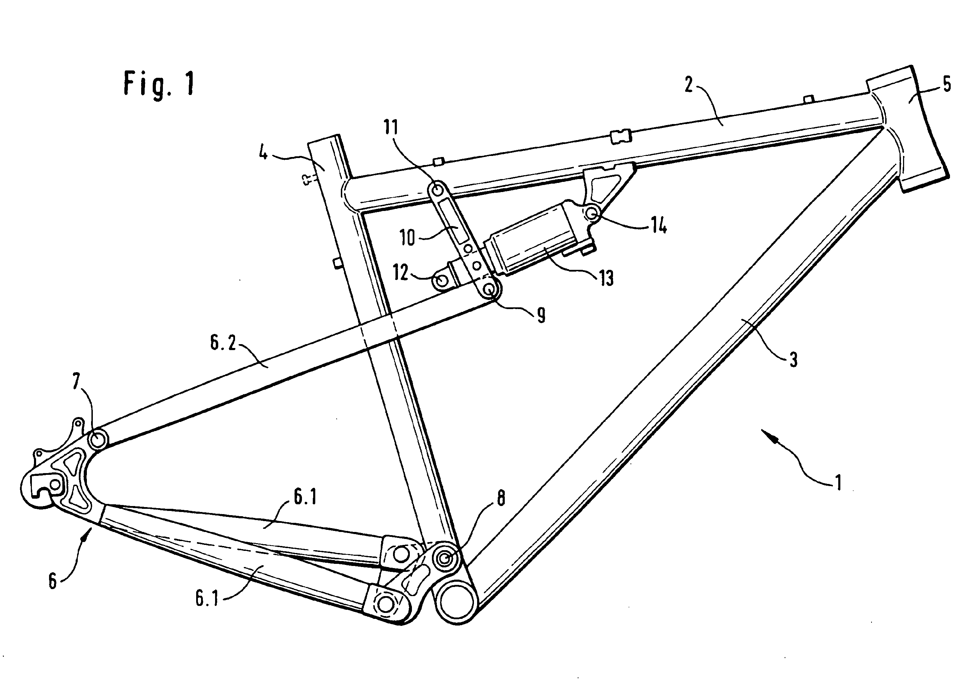

Der in Figur 1 dargestellte und mit 1 bezeichnete Rahmen ist dreieckförmig ausgebildet und besteht aus dem nahezu waagerecht verlaufenden Oberrohr 2, dem schräg verlaufenden Unterrohr 3 und dem nahezu senkrecht verlaufenden Sitzrohr 4, das zur Aufnahme eines nicht dargestellten Sattels dient. Oberrohr 2 und Unterrohr 3 sind über das Steuerrohr 5 miteinander verbunden, durch das eine nicht dargestellte Lenkeinrichtung hindurchgeführt ist, die an ihrem unteren Ende ein ebenfalls nicht dargestelltes Vorderrad aufnimmt. Zum Rahmen 1 gehört weiter die Hinterradschwinge 6, die sich aus der unteren Hinterradstrebe 6.1 und der oberen Hinterradstrebe 6.2 zusammensetzt. Beide Hinterradstreben 6.1, 6.2 sind doppelt vorhanden und nehmen zwischen sich ein ebenfalls nicht dargestelltes Hinterrad auf. Im Ausführungsbeispiel sind die unteren Hinterradstreben 6.1 nicht spiegelbildlich hintereinander angeordnet, was allerdings für die Erfindung ohne Bedeutung ist.

Wie Figur 1 weiter erkennen lässt, ist die untere Hinterradstrebe 6.1 einerseits über eine erste Lagerstelle 7 mit der oberen Hinterradstrebe 6.2 und andererseits über eine zweite Lagerstelle 8 mit dem Sitzrohr 4 verbunden. Die obere Hinterradstrebe 6.2 wiederum ist an ihrem anderen Ende über eine dritte Lagerstelle 9 mit einem Anlenkhebel 10 verbunden, der wiederum über eine vierte Lagerstelle 11 mit dem Oberrohr 2 des Rahmens 1 verbunden ist. Die obere Hinterradstrebe 6.2 ist darüber hinaus über eine fünfte Lagerstelle 12 mit einem Dämpfungsglied 13 verbunden, das wiederum über eine sechste Lagerstelle 14 am Oberrohr 2 angelenkt ist. Die Anordnung und die Anzahl der einzelnen Lagerstellen ist beliebig. Es kommt lediglich darauf an, diese gemäß der Erfindung lagertechnisch auszugestalten.

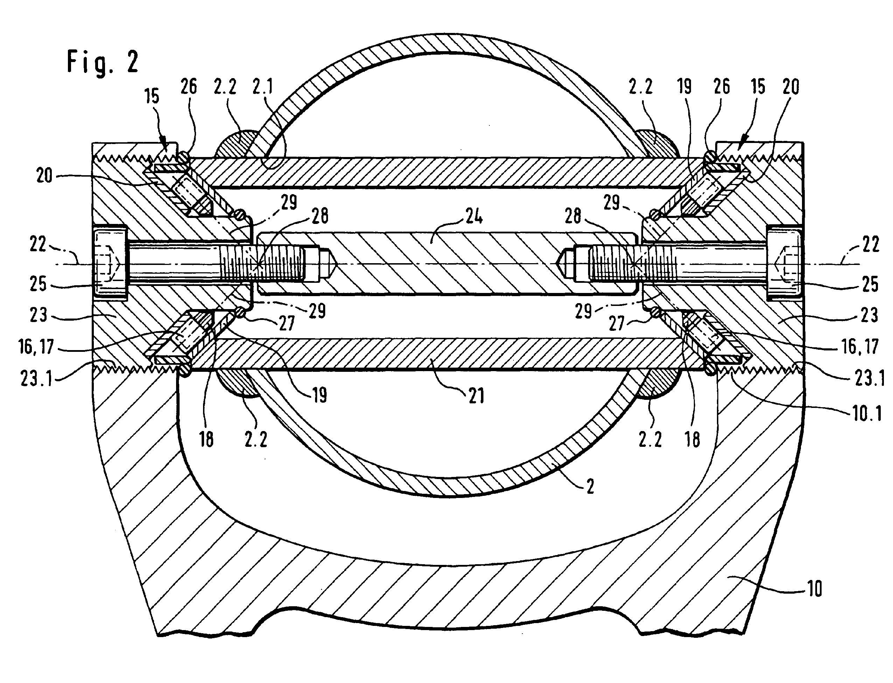

In Figur 2 ist ein Längsschnitt durch die vierte Lagerstelle 11 gezeigt, die den Anlenkhebel 10 mit dem Oberrohr 2 verbindet. In eine durchgehende Aufnahmebohrung 2.1 des Oberrohres 2 ist eine erfindungsgemäße Lageranordnung eingesetzt, die sich aus zwei in axialer Richtung voneinander beabstandeten Schrägnadellagern 15 zusammensetzt. Diese bestehen aus einem Rollenkranz 16, dessen Lagernadeln 17 in einem Käfig 18 geführt sind. Zum Schrägnadellager 15 gehören weiter die beiden Laufscheiben 19, 20. Die beiden Schrägnadellager 15 sind zueinander so angestellt, dass die Schnittpunkte 28 der verlängerten Drehachsen 29 der Lagernadeln 17 auf der Lagerachse 22 liegen. Die Drehachsen 29 weisen dabei pfeilartig in Richtung Lagermitte. Die in Richtung Lagerzentrum angeordnete Laufscheibe 19 stützt sich an einer Buchse 21 ab, die von der Aufnahmebohrung 2.1 des Oberrohrs 2 aufgenommen ist und mit dem Oberrohr 2 durch Schweißpunkte 2.2 fest verbunden ist. Die andere Laufscheibe 20 stützt sich an einer schräg zur Lagerachse 22 verlaufenden Fläche einer Einstellschraube 23 ab. Die konisch ausgebildete Einstellschraube 23 ist mit ihrem Außengewinde 23.1 vom Innengewinde 10.1 des Anlenkhebels 10 aufgenommen. Zur erfindungsgemäßen Lageranordnung gehört auch das Verbindungsstück 24, das mit den beiden Einstellschrauben 23 über je eine Befestigungsschraube 25 verbunden ist. Dies erfolgt derart, dass diese Schrauben 25 die Einstellschrauben 23 in ihrer ganzen axialen Länge durchsetzen und mit einem Gewinde in eine Aufnahmebohrung des Verbindungsstückes 24 eingeschraubt sind. Die Abdichtung der Schrägnadellager 15 nach außen erfolgt durch einen Dichtring 26, der an der Nahtstelle zwischen Buchse 21 und Einstellschraube 23 angeordnet ist. Ein weiterer Dichtring 27 ist auf den inneren zylindrisch ausgebildeten Teil der Einstellschraube 23 aufgesetzt und sorgt dafür, dass während des Montagevorganges die Schrägnadellager 15 nicht von den Einstellschrauben 23 abgleiten können

Die Montage der erfindungsgemäßen Lageranordnung erfolgt derart, dass in einem ersten Schritt die Schrägnadellager 15 auf die Einstellschrauben 23 aufgesetzt werden. Danach werden sowohl der äußere Dichtring 26 als auch der innere Dichtring 27 aufgeschoben. Letzter verhindert, dass die Schrägnadellager 15 von den Einstellschrauben 23 herunterfallen können. Anschließend wird eine der beiden Einstellschrauben 23 mit dem Verbindungsstück 24 verbunden, indem die Befestigungsschraube 25 in das Verbindungsstück 24 eingeschraubt wird. Danach werden beide Einstellschrauben 23 mit darauf angeordnetem Schrägnadellager 15 in den Anlenkhebel 10 eingeschraubt. Durch dieses Einschrauben, d. h., durch die Veränderung des axialen Abstandes der beiden Schrägnadellager 15 zueinander, kann die gewünschte Vorspannung der Lageranordnung eingestellt werden. Danach wird die zweite Befestigungsschraube 25 mit dem Verbindungsstück 24 verbunden, so dass die Lagereinheit nunmehr komplett zusammengesetzt ist. Die Figur 2 lässt erkennen, dass die erfindungsgemäße Lageranordnung sich in einfacher Weise montieren und demontieren lässt und Kräfte sowohl in radialer als auch in axialer Richtung problemlos aufnehmen kann. Wird nun durch eine Unebenheit im Gelände eine Bewegung des Hinterrades ausgelöst, so überträgt sich diese über die vorhandenen Lageranordnungen bis zur vierten Lagerstelle 11, wobei der Anlenkhebel 10 eine Schwenkbewegung zum Oberrohr 2 des Rahmens 1 vollführt.

### Bezugszeichen

- 1: Rahmen
- 2: Oberrohr
- 2.1: Aufnahmebohrung
- 2.2: Schweißpunkt
- 3: Unterrohr
- 4: Sitzrohr
- 5: Steuerrohr
- 6: Hinterachsschwinge
- 6.1: untere Hinterradstrebe
- 6.2: obere Hinterradstrebe
- 7: erste Lagerstelle
- 8: zweite Lagerstelle
- 9: dritte Lagerstelle
- 10: Anlenkhebel
- 10.1: Innengewinde
- 11: vierte Lagerstelle
- 12: fünfte Lagerstelle
- 13: Dämpfungsglied
- 14: sechste Lagerstelle
- 15: Schrägnadellager
- 16: Rollenkranz
- 17: Lagernadel
- 18: Käfig
- 19: Laufscheibe
- 20: Laufscheibe
- 21: Buchse
- 22: Lagerachse
- 23: Einstellschraube
- 23.1: Außengewinde
- 24: Verbindungsstück
- 25: Befestigungsschraube
- 26: Dichtring
- 27: Dichtring
- 28: Schnittpunkt
- 29: Drehachse

## Patentansprüche

1. Fahrrad mit einem Rahmen (1), einer gefederten, ein Hinterrad tragenden Hinterradschwinge (6), die in Bezug zum Rahmen (1) eine Bewegung ausführen kann, bei der sich das Hinterrad auf einer Bahn bewegt, wobei die Hinterradschwinge (6) über wenigstens eine Lagerstelle (7, 8, 9, 11, 12, 14) mit dem Rahmen (1) verbunden ist und die Lagerstelle (7, 8, 9, 11, 12, 14) durch zwei in axialer Richtung voneinander beabstandete Schrägnadellager gebildet ist, deren Abstand zueinander ein- und nachstellbar ist, **dadurch gekennzeichnet, dass** in einem Käfig (18) geführte Lagernadeln (17) auf zugehörigen Laufscheiben (19, 20) abrollen, wobei die eine Laufscheibe (19) mit wenigstens einem Teil ihrer äußeren Mantelfläche an einer äußeren drehfest angeordneten Buchse (21) anliegt, während die andere Laufscheibe (20) von einer Einstellschraube (23) aufgenommen ist, die mit einem Außengewinde (23.1) in ein Innengewinde (10.1) eines beweglichen Teils (10) eingesetzt ist.

2. Fahrrad nach Anspruch 1, **dadurch gekennzeichnet, dass** die beiden in axialer Richtung voneinander beabstandeten Einstellschrauben (23) miteinander verbunden sind.

3. Fahrrad nach Anspruch 1, **dadurch gekennzeichnet, dass** in der äußeren Buchse (21) ein Verbindungsstück (24) angeordnet ist, das mit den beiden Einstellschrauben (23) über je eine Befestigungsschraube (25) verbunden ist.

4. Fahrrad nach Anspruch 1, **dadurch gekennzeichnet, dass** an der der äußeren Buchse (21) zugeordneten Laufscheibe (19) an deren beiden Enden je ein Dichtring (26, 27) angeordnet ist.

5. Fahrrad nach Anspruch 1, **dadurch gekennzeichnet, dass** die Hinterradschwinge (6) aus einer unteren Hinterradstrebe (6.1) und aus einer oberen Hinterradstrebe (6.2) gebildet ist, die miteinander über die erste Lagerstelle (7) verbunden sind und dass die untere Hinterradstrebe (6.1) über die zweite Lagerstelle (8) mit dem Rahmen (1) verbunden ist.

6. Fahrrad nach Anspruch 5, **dadurch gekennzeichnet, dass** die obere Hinterradstrebe (6.2) über die dritte Lagerstelle (9) mit einem Anlenkhebel (10) verbunden ist, der wiederum über die vierte Lagerstelle (11) mit einem Oberrohr (2) des Rahmens (1) verbunden ist.

7. Fahrrad nach Anspruch 5, **dadurch gekennzeichnet, dass** die obere Hinterradstrebe (6.2) über die fünfte Lagerstelle (12) mit einem Dämpfungsglied (13) verbunden ist, das wiederum über die sechste Lagerstelle (14) mit dem Oberrohr (2) verbunden ist.

## Claims

1. Bicycle with a frame (1), a sprung swing arm rear suspension (6) which bears a rear wheel and can execute a movement in relation to the frame (1) during which the rear wheel moves on a trajectory, the swing arm rear suspension (6) being connected to the frame (1) via at least one bearing (7, 8, 9, 11, 12, 14), and the bearing (7, 8, 9, 11, 12, 14) being formed by two oblique needle bearings which are spaced apart from each another in the axial direction and the distance of which with respect to each other can be adjusted and readjusted, **characterized in that** bearing needles (17) which are guided in a cage (18) roll along associated running discs (19, 20), one running disc (19) bearing with at least part of its outer circumferential surface against an outer bushing (21) arranged in a rotationally fixed manner while the other running disc (20) is held by an adjusting screw (23) which is inserted by an external thread (23.1) into an internal thread (10.1) of a movable part (10).

2. Bicycle according to Claim 1, **characterized in that** the two adjusting screws (23) which are spaced apart from each other in the axial direction are connected to each other.

3. Bicycle according to Claim 1, **characterized in that** a connecting piece (24) is arranged in the outer bushing (21) and is connected to the two adjusting screws (23) via a respective fastening screw (25).

4. Bicycle according to Claim 1, **characterized in that** a respective sealing ring (26, 27) is arranged at both ends of the running disc (19) assigned to the outer bushing (21).

5. Bicycle according to Claim 1, **characterized in that** the swing arm rear suspension (6) is formed from a lower rear wheel strut (6.1) and from an upper rear wheel strut (6.2) which are connected to each other via the first bearing (7), and **in that** the lower rear wheel strut (6.1) is connected to the frame (1) via the second bearing (8).

6. Bicycle according to Claim 5, **characterized in that** the upper rear wheel strut (6.2) is connected via the third bearing (9) to an articulation lever (10) which in turn is connected via the fourth bearing (11) to a cross bar (2) of the frame (1).

7. Bicycle according to Claim 5, **characterized in that** the upper rear wheel strut (6.2) is connected via the fifth bearing (12) to a damping element (13) which is connected in turn via the sixth bearing (14) to the cross bar (2).

## Revendications

1. Bicyclette avec un cadre (1), une fourche oscillante arrière suspendue (6) qui porte une roue arrière et qui peut accomplir par rapport au cadre (1) un mouvement au cours duquel la roue arrière se déplace sur une trajectoire, sachant que la fourche oscillante arrière (6) est reliée au cadre (1) par l'intermédiaire d'au moins un palier (7, 8, 9, 11, 12, 14) et que le palier (7, 8, 9, 11, 12, 14) est formé par deux roulements à aiguilles à contact oblique mutuellement distants en direction axiale, dont la distance mutuelle est réglable et ajustable, **caractérisée en ce que** des aiguilles de roulement (17) guidées dans une cage (18)roulent sur des disques de butée associés (19, 20), sachant qu'un (19) des disques de butée s'applique par au moins une partie de sa surface circonférentielle extérieure contre une bague extérieure (21) disposée bloquée en rotation, tandis que l'autre disque de butée (20) est reçu par une vis de réglage (23) qui est insérée par un filetage extérieur (23.1) dans un filetage intérieur (10.1) d'un élément mobile (10).

2. Bicyclette selon la revendication 1, **caractérisée en ce que** les deux vis de réglage (23) mutuellement distantes en direction axiale sont reliées entre elles.

3. Bicyclette selon la revendication 1, **caractérisée en ce qu'**une pièce de liaison (24) est disposée dans la bague extérieure (21), pièce qui est reliée aux deux vis de réglage (23) par l'intermédiaire d'une vis de fixation respective (25).

4. Bicyclette selon la revendication 1, **caractérisée en ce qu'**une bague d'étanchéité respective (26, 27) est disposée à chacune des deux extrémités du disque de butée (19) associé à la bague extérieure (21).

5. Bicyclette selon la revendication 1, **caractérisée en ce que** la fourche oscillante arrière (6) est constituée d'un bras de fourche arrière inférieur (6.1) et d'un bras de fourche arrière supérieur (6.2) qui sont reliés entre eux par l'intermédiaire du premier palier (7), et **en ce que** le bras de fourche arrière inférieur (6.1) est relié au cadre (1) par l'intermédiaire du deuxième palier (8).

6. Bicyclette selon la revendication 5, **caractérisée en ce que** le bras de fourche arrière supérieur (6.2) est relié par l'intermédiaire du troisième palier (9) à un levier articulé (10) qui est lui-même relié par l'intermédiaire du quatrième palier (11) à un tube supérieur (2) du cadre (1).

7. Bicyclette selon la revendication 5, **caractérisée en ce que** le bras de fourche arrière supérieur (6.2) est relié par l'intermédiaire du cinquième palier (12) à un élément amortisseur (13) qui est lui-même relié par l'intermédiaire du sixième palier (14) au tube supérieur (2).
